# DEMANDE DE BREVET EUROPEEN

(11) **EP 0 731 041 A1**
(43) Date de publication de la demande: **11.09.1996**
(21) Numéro de dépôt: 96470002.5
(22) Date de dépôt: 01.03.1996
(51) Int. Cl.: B65G 27/32

(54) **Procédé et dispositif de commande de systèmes vibrants pour le déplacement de pièces**

(30) Priorité: 10.03.1995 FR 9503021
(71) Demandeur: Selma Electronique, 25004 Besancon (FR)
(72) Inventeur: Bertet, Pierre, 57000 Metz (FR)
(74) Mandataire: Schmit, Christian Norbert Marie

(57) **Abrégé**

Pour commander un système vibrant de transport d'objets, les impulsions énergétiques (13), destinées à maintenir le système en vibration pour assurer le déplacement des objets, sont appliquées avec un décalage de durée (φ₀) prédéterminée et sensiblement constante, par rapport à l'instant réel du passage du système dans une position fixe prédéfinie (O₁, O₂).

Application à la commande des systèmes vibrants tels que bols vibrants, goulottes vibrantes, etc.

## Description

La présente invention concerne les dispositifs de transport vibrants, classiquement utilisés pour l'alimentation de machines ou installations industrielles en pièces diverses, généralement d'assez petite taille, et plus particulièrement la commande et la régulation de ces systèmes.

L'invention peut notamment s'appliquer à tous les systèmes de transport, manipulation, sélection positionnement, chargement de pièces unitaires, de sous ensembles ou de matériaux en vrac, indépendamment de leur formes, dimensions, poids, utilisant la mise en vibration d'un conteneur ou simplement d'un support par rapport à un socle ou bâti, pour mettre ces divers objets en mouvement.

Les dits conteneurs ou supports peuvent être de forme générale conique, tronconique, cylindrique, munis ou non de rampes hélicoïdales, tels que par exemple des bols vibrants. Ils peuvent aussi se présenter sous forme de goulottes ou auges de transport, et être pourvus de divers dispositifs complémentaires de sélection, positionnement, criblage, etc.

Dans les systèmes connus, quelque soit le type de conteneurs, ceux-ci sont généralement reliés à un socle fixe par l'intermédiaire d'éléments élastiques de formes diverses, tels que ressorts à lames, ressorts à boudins, silentblocs, éventuellement complétés par des organes mécaniques tels que biellettes ou excentriques, qui autorisent leur mise en vibration. Ces systèmes vibrants comportent également des moyens pour générer et entretenir ces vibrations. Ces moyens moteurs peuvent notamment être des moteurs électromagnétiques (électro-aimants alimentés par des courants périodiques) ou des moteurs rotatifs, continus ou asynchrones (moteurs rotatifs à balourd fixés sur le conteneur vibrant ou moteurs rotatifs, fixés par exemple sur le socle, et pourvus de moyens de liaison mécanique avec le conteneur, tels que biellettes ou excentriques). On notera que pour les moteurs rotatifs, le seul réglage possible en cours de fonctionnement est la vitesse de rotation qui détermine la fréquence des vibrations, le réglage de l'amplitude des vibrations ne pouvant généralement se faire que à l'arrêt par réglage du balourd ou de l'excentration.

Les moteurs électromagnétiques peuvent être soit des moteurs à réaction, dans lesquels l'électro-aimant est solidaire du conteneur et met en mouvement une masse qui communique ce mouvement au conteneur par réaction, soit des moteurs électromagnétiques à action directe, l'électro-aimant étant par exemple fixé au support et attirant une masse polaire solidaire du conteneur. Dans ces moteurs à action directe, l'alimentation de l'électro-aimant se fait par impulsions successives qui provoquent l'attraction de la masse polaire, celle-ci étant rappelée en arrière, entre les impulsions, par l'effet des moyens élastiques reliant support et conteneur. Ces moteurs sont actuellement très courants sur des dispositifs vibrants circulaires, tels que les bols vibrants.

Qu'ils soient à action directe ou à réaction, les moteurs électromagnétiques sont pilotés de manière similaire, par des impulsions de courant électrique envoyées à l'électro-aimant.

Un type d'alimentation, encore le plus fréquent actuellement, est effectué à partir du courant secteur alternatif. Cette alimentation est rendue réglable par l'utilisation de composants électroniques de commutation de type thyristors ou TRIACS, qui, au cours d'une période, interrompent ou autorisent le passage du courant pendant un temps variable tout en conservant une fréquence fixe égale à celle du secteur, ou double de celle-ci si on utilise un courant redressé deux alternances.

Ce type d'alimentation présente notamment deux inconvénients :
- la fréquence est fixe,
- le réglage de l'amplitude n'est pas linéaire et présente des zones de grande sensibilité ce qui rend difficile et instable le réglage à certains régimes.

Dans d'autres systèmes d'alimentation, les impulsions sont générées par un circuit de commande qui permet de régler la fréquence des vibrations. L'énergie communiquée par le moteur au conteneur peut être modulée en modifiant la largeur des impulsions, pour adapter l'énergie transmise à la masse présente dans le conteneur de manière à maintenir une amplitude des vibrations constante, donc une vitesse de déplacement des objets constante.

Dans des systèmes de ce type, non régulés, le réglage de la fréquence et de l'amplitude est effectué manuellement.

Un problème général qui se pose lors de l'utilisation de ces systèmes est d'assurer la régularité du débit des objets transportés. Or, si la masse du conteneur ou du support est fixe, celle des matériaux ou objets est variable lors du fonctionnement parce que d'une part les objets quittent en permanence le conteneur ou support, et d'autre part, l'alimentation du système vibrant se fait elle-même de manière discontinue. Ces variations de poids des objets ou matériaux présents dans le système vibrant provoquent des variations de l'amplitude des vibrations car la masse totale à mettre en mouvement est variable. Ces variations d'amplitude entraînent à leur tour une variation de la vitesse de déplacement des objets et donc du débit. Une autre cause de variation de débit est liée aux variations de l'alimentation électrique des moteurs, qui peuvent être dues à la tension ou à la fréquence d'alimentation.

Par ailleurs, il est très souvent demandé aux systèmes vibrants, en plus d'une alimentation régulière, de fournir des pièces positionnées. Ces opérations se font à l'aide de dispositifs mécaniques par lesquels les pièces passent une par une (pièges). Ces dispositifs sont étudiés de telle manière que toute pièce non conforme ou mal positionnée soit éliminée ou recyclée. Les pièces sont également recyclées lorsque l'alimentation du piège se fait plus vite que l'utilisation des pièces en sortie (bourrage).

Il est essentiel dans ce genre d'application, de ne pas éliminer de pièces à tort, et de recycler le moins de pièces possibles car elles subissent à chaque cycle une usure qui peut devenir excessive.

La mise au point de ces dispositifs est extrêmement longue et coûteuse car, en plus de l'élaboration des pièges, il faut optimiser le fonctionnement des dispositifs vibrants du point de vue du débit et de la réponse en fréquence (opération dite de "mise au poids") de manière à obtenir une avance régulière des pièces, sans qu'elles sautent, ce qui est la cause principale de rejet et oblige à déplacer les pièces à une vitesse très supérieure à la normale de manière à ne pas avoir de d'insuffisance dans l'alimentation.

Par ailleurs encore, dans certains cas, une modification brusque dans l'environnement du système vibrant (déversement de pièces) provoque son passage dans un fonctionnement anarchique du à l'entrée en résonance du système vibrant et des pièces ou des masses polaires du moteur électromagnétique qui se choquent. L'entrée dans ce genre de fonctionnement est irréversible et il est obligatoire de couper l'alimentation électrique du système pour l'arrêter. Il est évident que ces fonctionnements mettent à rude épreuve les composants des systèmes vibrants et diminuent dans de fortes proportions la durée de vie des moteurs, des ressorts, etc...

Enfin, les composants mécaniques d'un système vibrant mal adapté en fréquence, sont soumis à des vibrations non sinusoïdales à taux d'harmoniques élevés. Ces vibrations sont responsables d'une fatigue rapide, en particulier des ressorts, et d'une durée de vie couramment divisée par deux ou trois.

Pour toutes ces raisons, il est donc recherché une optimisation du fonctionnement des systèmes vibrants.

On connaît, par le document US-A-4 216 416 un système de régulation, pour la commande de bols vibrants, comportant un capteur permettant d'obtenir une information sur la fréquence réelle et sur l'amplitude des vibrations. Le circuit de commande fournit alors des impulsions en synchronisme avec la fréquence propre du bol, mesurée à l'aide du capteur, l'amplitude des vibrations étant régulée sur une valeur de consigne en jouant sur la largeur, c'est-à-dire la durée, des impulsions. Selon le document précité, ce système de régulation permet de fournir au bol vibrant des impulsions au point optimum dans le cycle d'oscillation, pour maintenir automatiquement une amplitude constante souhaitée des vibrations, aux fréquences de résonance du bol, variables en fonction de sa charge, dans le but de maintenir un débit constant de fourniture des pièces contenues dans le bol.

Les auteurs de la présente invention, par une étude approfondie des systèmes vibrants, ont toutefois constaté qu'un tel système de régulation en fréquence, basé sur l'auto-adaptation de la fréquence des impulsions de commande à la fréquence détectée par le capteur, serait susceptible de conduire à un comportement irrégulier ou anarchique du système vibrant, notamment du fait que, suite à la variation de fréquence des impulsions, celles-ci pourraient être générées à des instants ne donnant pas une efficacité optimale à la transmission d'énergie aux objets par le conteneur.

Le document JP-A-58 113013 décrit un système qui utilise une mesure du déphasage entre la force d'excitation et l'amplitude de la vibration et compare ce déphasage avec une valeur de déphasage prédéterminée, pour agir sur la fréquence de commande de manière à maintenir le dispositif vibrant à la résonnance. Ce système est donc en fait également un système fonctionnant en régulation de fréquence, similaire à celui décrit dans le document US-A-4 216 416 précité, à la différence que au lieu de mesurer directement la fréquence, on utilise une comparaison entre un déphasage mesuré et un déphasage souhaité prédéfini. Ce système pose comme a priori que la fréquence de fonctionnement d'un système vibrant est variable, et cherche à rendre égales la fréquence de pilotage et la fréquence mesurée, en modifiant la fréquence de pilotage de manière à maintenir un déphasage constant, partant du principe que si ce déphasage est constant, les deux dites fréquences sont identiques. Cette approche du fonctionnement des systèmes vibrants concernés par la présente invention constitue en fait une approche globale du phénomène considérant que l'équation définissant le mouvement du système est une équation continue du type sin(ωt+ϕ), ω étant variable et ϕ constant. Or les études réalisées par les inventeurs de la présente invention ont montré qu'il n'y a en pratique aucune continuité d'une période à l'autre dans le mouvement réel du système vibrant, du fait notamment des perturbations résultantes du déplacement des pièces à transporter, qui entraînent un fonctionnement du système dans un régime que l'on peut qualifier de chaotique, donc essentiellement non régulier d'une période à l'autre.

La présente invention a pour but de résoudre les problèmes évoqués ci-dessus et vise à améliorer les caractéristiques de régulation des systèmes vibrants connus, pour obtenir la meilleure efficacité possible de ces systèmes, tant en ce qui concerne leur rendement énergétique que la régularité de débit. L'invention vise aussi à améliorer la fiabilité de ces systèmes vibrants, à réduire le bruit généré par leur fonctionnement, à éviter la dégradations des objets transportés, à faciliter la mise en service de ces systèmes vibrants et à permettre leur adaptation rapide à des changements dans la nature et notamment le poids des objets transportés, sans de longues opérations de mise au point lors de ces changements.

Avec ces objectifs en vue, l'invention a pour objet un procédé de commande de systèmes vibrants utilisés pour le transport ou l'alimentation d'objets dans des installations industrielles, selon lequel on fournit au dit système vibrant des impulsions de durée et d'intensité prédéterminées pour le maintenir en vibration avec une amplitude souhaitée et assurer un déplacement voulu des dits objets, caractérisé en ce que, lors de chaque période de vibration, considérée individuellement, on applique l'impulsion avec un décalage temporel de durée prédéterminée, sensiblement constante mais ponctuellement ajustée en fonction du déplacement réel du système vibrant au cours des périodes précédentes, par rapport à l'instant réel du passage du système dans une position fixe prédéterminée définissant le début de chaque période.

Le procédé selon l'invention est donc basé sur l'idée de fixer un décalage sensiblement constant en durée entre un instant origine de chaque période de vibration et l'instant auquel est fournie l'impulsion, alors que, en comparaison, par application de la méthode décrite dans le document précité, ce déphasage serait certes constant en pourcentage de la durée de chaque cycle de vibration, mais serait en fait variable en durée, du fait des variations de la fréquence des impulsions.

La dite position fixe prédéfinie peut notamment être la position de repos du système vibrant, c'est-à-dire que l'instant pris comme référence de début de chaque période de vibration du système vibrant est alors l'instant où le système passe dans sa position de repos après l'impulsion fournie lors de la période précédente.

On comprendra aisément que, par un simple décalage dans le temps, identique pour chaque période, la dite position fixe peut ne pas être la position de repos. Il faut cependant que cette position fixe soit choisie en dehors de la fourchette de positions dans laquelle l'impulsion est fournie, c'est à dire en dehors de la position dans laquelle se produit le choc des pièces sur le système vibrant, et le plus près possible après cette position, à un moment de la période où le système se déplace librement en suivant quasiment parfaitement la portion de sinusoïde théorique correspondant à un déplacement non perturbé.

L'invention a aussi pour objet un dispositif de commande de systèmes vibrants utilisés pour le transport et l'alimentation d'objets, comportant un capteur pour fournir une information sur les vibrations du système vibrant, des moyens de traitement du signal fourni par le capteur, pour détecter, au cours de chaque cycle de vibration, l'instant réel de passage du système vibrant dans une position fixe prédéfinie, et fournir un signal de synchronisation correspondant à cet instant, et des moyens de régulation pour fournir au dit système vibrant des impulsions énergétiques avec un décalage, de durée prédéterminée, sensiblement constante, par rapport au dit instant.

Selon d'autres dispositions de l'invention,
- les moyens de traitement du signal du capteur fournissent également un signal représentatif de l'amplitude des vibrations, et les moyens de régulation déterminent aussi l'intensité de l'impulsion énergétique pour réguler l'amplitude des vibrations sur une valeur de consigne ;
- le dispositif comporte des moyens d'apprentissage pour déterminer, au cours d'une séquence d'apprentissage, la valeur du dit décalage et la durée de la dite impulsion ;
- le capteur est un accéléromètre fixé sur le conteneur mobile du système vibrant.

D'autres caractéristiques et avantages de l'invention apparaîtront dans la description qui va être faite, à titre d'exemple non limitatif, d'un procédé et d'un dispositif de commande d'un bol vibrant mis en vibration par un moteur électromagnétique, du type à action directe.

On se reportera aux dessins annexés dans lesquels :
- la figure 1 est une représentation schématique, en vue de côté, d'un bol vibrant de type classique,
- la figure 2 montre, en vue de dessus, la disposition des électro-aimants constituant les moyens de mise en vibration du bol,
- la figure 3 est une représentation graphique du déplacement du bol en fonction du temps, dans des conditions théoriques idéales, montrant en correspondance les impulsions fournies au bol et la trajectoire des pièces contenues dans le bol,
- la figure 4 illustre le principe du procédé de commande des vibrations du bol, conformément à l'invention,
- la figure 5 est un schéma bloc du dispositif de commande selon l'invention,
- la figure 6 est une vue en coupe d'un capteur utilisé pour fournir le signal représentatif des vibrations du bol,
- la figure 7 illustre l'exploitation du signal fourni par le capteur,
- les figures 8 et 9 sont des schémas de l'alimentation du moteur électromagnétique,
- la figure 10 représente, en concordance de temps, le signal définissant l'origine de chaque période, l'impulsion générée en réponse à ce signal, et la tension et l'intensité du courant fourni au moteur,
- la figure 11 illustre graphiquement, de manière simplifiée, la relation entre la charge du système vibrant, l'énergie qui lui est fournie par les impulsions et l'amplitude des vibrations résultantes.

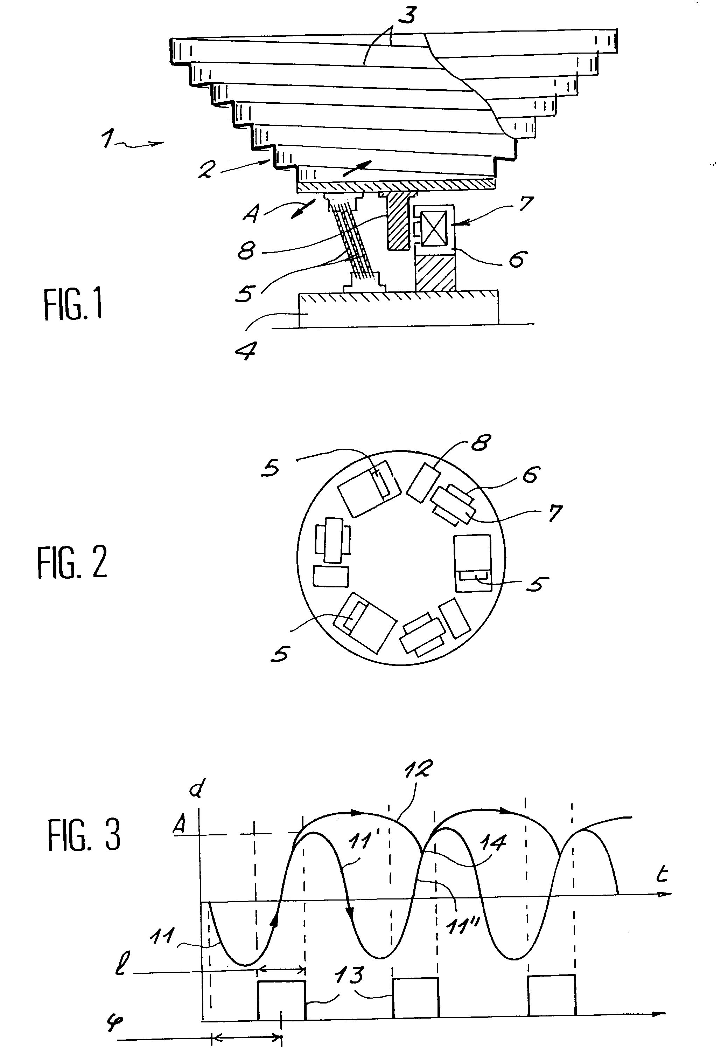

Sur le dessin de la figure 1, on a représenté de manière simplifiée, un bol vibrant 1 de type connu en soi, destiné par exemple à l'alimentation en petites pièces mécaniques d'une installation de traitement ou d'assemblage de ces pièces.

Le bol vibrant comprend, de manière classique, un conteneur 2 de forme tronconique, dont les parois latérales forment un chemin hélicoïdal 3 sur lequel les pièces se déplacent vers le haut, jusqu'à être évacuée en tombant l'une après l'autre par dessus le bord supérieur du bol. Le conteneur est relié à un socle fixe 4 par des organes élastiques, tels que les lames des ressorts 5.

Comme on le voit sur la figure 2, plusieurs ensembles de lames de ressort sont répartis circonférentiellement, pour permettre les vibrations du bol, selon une direction essentiellement hélicoïdale, qui résulte de l'inclinaison des lames du ressort.

Des moteurs 6 mettent le bol en vibration. Chaque moteur est essentiellement constituée d'un électro-aimant 7 solidarisé au socle fixe 4, et d'une masse polaire 8 associée, solidarisée au conteneur 2, attirée par l'électro-aimant à chaque impulsion de courant fournie à celui-ci.

De tels bols vibrants sont déjà bien connus. La description qui va suivre des moyens de commande de ce bol, concernera donc essentiellement les moyens permettant de fournir à l'électro-aimant les impulsions de courant requises pour initier et entretenir les vibrations du conteneur 2. On comprendra aisément que ces moyens pourront être utilisés pratiquement tels quels pour l'alimentation de tous autres types de moteurs électromagnétiques, y compris les moteurs du type à réaction déjà évoqués. Par ailleurs, l'homme du métier pourra aisément modifier ces moyens d'alimentation pour alimenter, avec les mêmes effets, des moteurs de type rotatifs, seul le réglage ou la régulation de l'amplitude des vibrations devant alors être, dans ce dernier cas, réalisé par des moyens spécifiques de réglage, également à la portée de l'homme du métier (moyens de déplacement du balourd ou d'ajustement de l'excentricité).

Pour faciliter la compréhension de l'invention, on va d'abord décrire, en relation avec la figure 3, le principe de fonctionnement d'un bol vibrant. Ces explications, qui résultent de l'analyse effectuée par les inventeurs du fonctionnement des systèmes vibrants, étant applicable à tout autre système vibrant similaire, quelle que soit la direction générale des vibrations et les objets déplacés par la mise en oeuvre de ces systèmes.

Le déplacement des pièces sur la rampe hélicoïdale 3 résulte de la combinaison des effets du mouvement vibratoire du conteneur 2 et de l'énergie transférée aux pièces lors de ces vibrations. De manière simplifiée, en ne considérant qu'une pièce, on peut dire que, à un instant donné de chaque cycle de vibration du bol, cette pièce reçoit du bol une certaine énergie qui la projette vers le haut et vers l'avant dans le sens de déplacement souhaité. Lorsque la pièce retombe par gravité sur la rampe, elle reçoit de nouveau une énergie qui provoque un nouveau saut de la pièce, et ainsi de suite. Pour que le fonctionnement soit optimum, l'instant où se produit le contact pièce-conteneur et donc la transmission d'énergie, devrait être toujours situé au même point de la période de vibration, pour fournir à chaque fois la même énergie, et de plus, la direction de la force exercée sur la pièce au moment du contact devrait être précisément celle permettant à la pièce de se déplacer dans le sens voulu et de retomber sur la rampe à l'instant précis d'un cycle de vibration permettant de recréer les mêmes conditions de déplacement et de transmission d'énergie.

Ces conditions idéales sont schématisées sur le diagramme de la figure 3, où la courbe 11 représente le déplacement d du bol en fonction du temps t, les créneaux 13 représentant les impulsions énergétiques fournies au bol pour entretenir le mouvement vibratoire.

On notera que tout point du conteneur suit, lors des vibrations, une trajectoire (flèche A de la figure 1), définie par la position des lames de ressort, qui est sensiblement un arc de cercle de rayon égal à la longueur active de ces lames, la vitesse de déplacement étant de forme générale sinusoïdale, le mouvement étant similaire à celui d'un pendule.

Pour entretenir ces vibrations, les impulsions ne peuvent pas être fournies à n'importe quel moment et indépendamment du cycle mécanique dont la période est déterminée par les caractéristiques des ressorts et les masses en mouvement.

Il existe dans ce cycle, une position (décalage ϕ) et une largeur l d'impulsion idéales pour que la force d'attraction, appliquée au conteneur par l'électro-aimant, communique au système le maximum d'énergie sans déformer le mouvement alternatif sinusoïdal garant de la régularité des mouvements, du bruit minimum et d'une fatigue minimum des ressorts.

Ces caractéristiques idéales (décalage ϕ et largeur l) sont variables d'un système vibrant à l'autre et sont directement liées à leurs caractéristiques mécaniques et géométriques.

Pendant la période ascendante de la trajectoire du conteneur, une pièce posée dans celui-ci, se voit communiquer une vitesse possédant une composante verticale et une composante horizontale. Dans certaines conditions, vitesse de déplacement du conteneur, force de frottement avec celui-ci, etc..., la pièce quitte le contact avec le conteneur et s'envole en se déplaçant dans le sens de la trajectoire ascendante du conteneur. La trajectoire de la pièce est représentée par les courbes 12 sur la figure 3.

Pendant ce vol de la pièce, le conteneur effectue la trajectoire descendante 11' et retrouve le contact avec la pièce pendant une trajectoire ascendante ultérieure 11". Un équilibre est trouvé lorsque la pièce entre en contact avec le conteneur toujours au même point 14 de sa trajectoire. Elle se voit alors communiquer les mêmes composantes de vitesse, donc la même trajectoire. Ceci reste vrai, statistiquement, pour une grande quantité de pièces dans le conteneur.

Cet équilibre ne peut être trouvé qu'à la condition que l'apport d'énergie des impulsions :
- compense les pertes naturelles dues aux frottements (entretien du mouvement propre du conteneur),
- compense les pertes dues à la chute des pièces (fonction du poids des pièces),
- propulse les pièces sur une trajectoire identique à la précédente (fonction du poids des pièces).

Pour un fonctionnement optimum, cet apport d'énergie doit se faire au moment du contact entre les pièces et le conteneur. Les impulsions apportant l'énergie étant placées dans la trajectoire ascendante, les pièces doivent donc retomber sur le chemin hélicoïdal pendant l'impulsion.

Dans ces conditions, le système vibrant fonctionne comme si le poids des pièces qui sont soit en vol soit portées par l'apport énergétique, était nul, et il fonctionne donc en permanence sur sa fréquence propre à vide.

Cette conclusion, sur la base de laquelle les inventeurs on imaginé et développé la présente invention, a été vérifiée expérimentalement, et il a été constaté que, dans des conditions idéales de fonctionnement, la fréquence des vibrations est totalement indépendante du poids des matériaux dans le conteneur et est égale à la fréquence propre du système vibrant à vide.

Les inventeurs ont donc finalement établi qu'un système utilisant un réglage de la fréquence comme moyen de pilotage des systèmes vibrants, ou un système auto-adaptatif en fréquence par verrouillage de phase tel que celui décrit dans le document US- A -4 216416 précité, ne correspondait pas, dans son principe, aux conclusions mentionnées ci-dessus.

La notion de fréquence n'a en effet que peu de signification pour un système vibrant chargé, son fonctionnement étant déterminé à chaque période au moment où il entre en contact avec les pièces. Or, les conséquences de ce contact ne peuvent être déterminées que de manière probabiliste car les pièces en "vol" forment un ensemble non homogène dont les constituants ont des vitesses de déplacement relatives.

L'impact n'est donc pas ponctuel. D'un impact à l'autre, le poids apparent des pièces oscille autour de zéro. S'agissant d'un système de type pendulaire, lorsque le poids du conteneur est affecté d'une partie du poids des pièces, même pendant un temps très court dans une période, celle-ci sera plus longue. Comme le poids apparent des pièces oscille autour de zéro, la période est en moyenne constante mais ponctuellement variable. En fait, la variation de durée de la période est due à un décalage de celle-ci, mais globalement le mouvement du système vibrant se fait à fréquence fixe, affectée d'une modulation de phase.

Le principe de l'invention est donc, non pas de chercher à réguler la fréquence des impulsions sur la fréquence de vibration mesurée, mais de générer chaque impulsion à un moment déterminé, dans chaque cycle de vibration, à partir de l'origine de chaque cycle, donc avec un décalage ϕ₀ constant en durée par rapport à cette origine. Ainsi, quelles que soient les perturbations que peut subir le mouvement vibratoire au cours d'un cycle quelconque, l'impulsion est toujours fournie au moment optimal pour provoquer le déplacement des pièces dans des conditions énergétiques et cinématiques constantes.

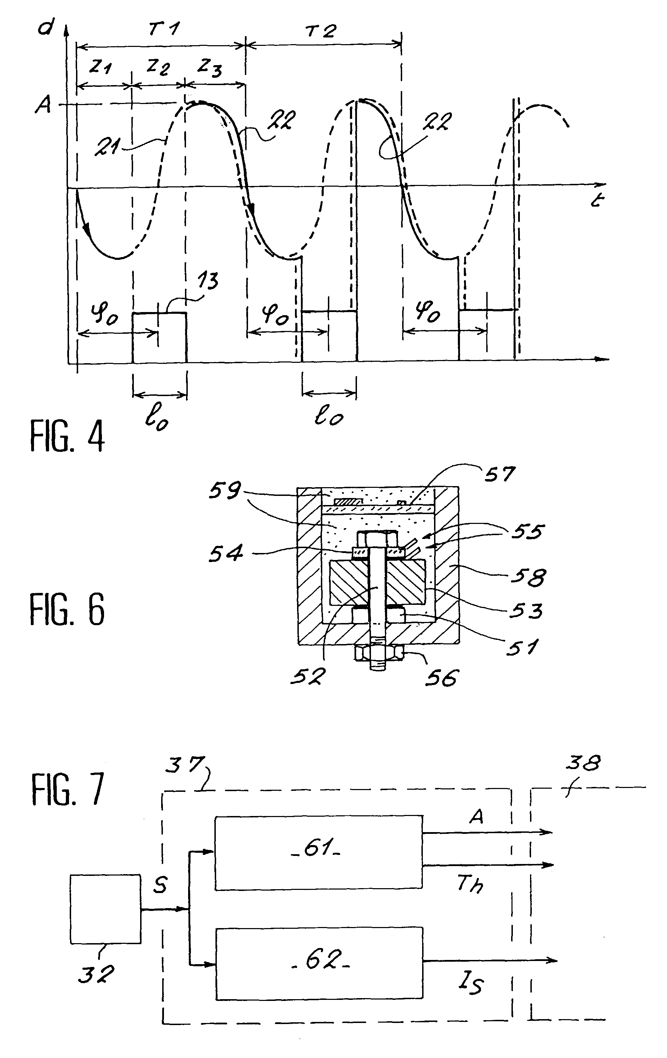

Ceci est illustré par le chronogramme de la figure 4, sur lequel le tracé en pointillé 21 représente le déplacement d du bol dans les conditions idéales indiquées précédemment, la durée de toutes les périodes étant fixe. Le tracé en traits pleins 22 illustre ce qui se passe réellement.

Pour chaque période (T₁, T₂) on peut distinguer trois zones temporelles :
- zone Z₁ du point de repos O₁ jusqu'au début de l'impulsion 13,
- zone Z₂ correspondant à la durée de l'impulsion,
- zone Z₃, de la fin de l'impulsion jusqu'au point de repos O₂.

Dans les zones Z₁ et Z₃, le système vibrant est libre, les pièces étant en vol, et la forme de l'onde vibratoire est la même pour chaque période, correspondant au mouvement vibratoire du conteneur à vide. Par contre, le bilan énergétique global entre l'apport énergétique de l'impulsion et l'énergie de chute des pièces peut varier en fonction de l'énergie réellement transmise aux pièces lors de l'impulsion 13. Par exemple, si ce bilan laisse apparaître un poids apparent de pièces positif (donc une certaine perte momentanée d'énergie), la période T₁ est allongée, ce qui va provoquer un passage du conteneur au point de repos O₂ en retard par rapport au fonctionnement idéal, et inversement si le poids apparent est négatif.

Le changement de durée de la période T₁ modifie l'origine du temps pour la période T₂, mais n'a aucune incidence sur son déroulement et ne préjuge en rien de sa durée, laquelle dépendra du bilan énergétique pendant cette période T₂, comme expliqué ci-dessus.

Le fait de fixer un décalage ϕ₀ constant par rapport à ce point de repos permet donc de fournir l'impulsion toujours au même point de déplacement du conteneur sur sa trajectoire, laquelle est libre, et donc considérée comme idéale, dans les zones Z₁ et Z₃. L'énergie est donc transmise aux pièces exactement au moment voulu de la période T₂.

Par comparaison, dans un système de régulation du type auto-adaptatif en fréquence, précédemment évoqué, on aurait par exemple mesuré la durée de la période T₁, constaté son allongement et donc une diminution de fréquence, et on aurait alors ajusté la fréquence des impulsions sur la fréquence mesurée, ce qui aurait provoqué une variation du décalage de l'impulsion (en terme de durée), par rapport à l'origine de la seconde période, et donc un décalage, par rapport à la situation optimale, de la zone Z₂ correspondant à l'impulsion sur la courbe représentative du mouvement vibratoire réel du conteneur. On comprendra facilement qu'un tel décalage perturberait les conditions vibratoires du conteneur, par une désynchronisation des impulsions par rapport au mouvement vibratoire naturel, de type pendulaire, du système vibrant, dont les caractéristiques mécaniques fixent la fréquence de résonnance.

Sous des conditions qui conduiraient à valider cette modification de fréquence des impulsions sur un grand nombre de périodes, cette désynchronisation pourrait de plus conduire à terme à un comportement anarchique du bol vibrant.

Le décalage constant ϕ₀, selon l'invention, permet en fait de recaler, dans chaque période, la position de l'impulsion par rapport au déplacement du bol, et donc d'éviter cette désynchronisation.

Autrement dit, le procédé selon l'invention modifie l'origine d'un repère temporel d'échelle fixe à chaque début de période, en fonction du passé, alors que les systèmes du type auto-adaptatifs en fréquence modifient, par rapport au passé, l'échelle d'un repère d'origine fixe, ce qui n'est pas compatible avec un système dynamique de type pendulaire.

On notera toutefois que, dans l'application du procédé selon l'invention, il est possible de procéder, éventuellement automatiquement, en cours de fonctionnement à des légers ajustements de la valeur du décalage ϕ₀, pour éviter que le système vibrant ne sorte de son fragile équilibre vibratoire, par exemple suite à une modification du propre régime vibratoire du conteneur (indépendamment de son contenu), une telle modification pouvant résulter par exemple du vieillissement naturel des organes mécaniques du système vibrant.

Au vu des explications qui précèdent, on aura déjà compris qu'il est nécessaire de déterminer préalablement à l'utilisation du bol vibrant, les caractéristiques requises de l'impulsion, tant en ce qui concerne le décalage ϕ₀ que la durée ou largeur l₀.

Cette détermination est effectuée lors d'une séquence automatisée d'apprentissage, au cours de laquelle :
- on provoque la mise en vibration du système vibrant à vide,
- on fait varier le déphasage ϕ et la durée l des impulsions, et on mesure l'amplitude des vibrations,
- on note le décalage ϕ₀ et la durée l₀ des impulsions provoquant une amplitude de vibrations maximale compatible avec les caractéristiques mécaniques du système vibrant.

Les fondements de l'inventions ayant été explicités ci-dessus, on va maintenant décrire en relation avec les figures 5 à 11, un système de commande conforme à l'invention.

Comme la mise en oeuvre du procédé selon l'invention nécessite d'intervenir dans la génération des impulsions au niveau de chaque période de vibration, le système de commande met en oeuvre des moyens de calcul permettant notamment d'une part d'effectuer une analyse du signal fourni par un capteur de vibrations adapté sur le système vibrant, et d'autre part de générer des signaux de puissance constituant les impulsions fournies à l'électro-aimant 7 du moteur 6.

Le dessin de la figure 5 est un schéma bloc du système de commande, et montre également quelques interfaces d'entrées et de sorties.

Le système de commande 30 comporte un ensemble de calcul 31 qui reçoit le signal issu du capteur 32 adapté sur le bloc vibrant 1, et qui peut par ailleurs être également connecté à un interface opérateur 33, permettant à ce dernier d'intervenir sur le système de commande en cours d'utilisation du bol vibrant, à un interface de programmation 34, et à un réseau 35 de gestion des installations, ce réseau comportant par exemple un micro-ordinateur 36 permettant une gestion centralisé de nombreux systèmes vibrants 30' mis en oeuvre dans une installation industrielle.

L'ensemble de calcul 31 comporte un premier calculateur 37 de traitement du signal S fourni par le capteur 32, un second calculateur 38 de régulation et d'apprentissage, une mémoire de programme et d'apprentissage 39, et un bloc 40 de liaison avec les interfaces d'entrée 33, 34... mentionnés ci-dessus.

Le second calculateur 38 comporte fonctionnellement un bloc 41 dédié à la gestion de synchronisation, (contrôle du décalage ϕ et de la durée l des impulsions), un bloc 42 dédié à la régulation d'amplitude A des vibrations (contrôle de l'intensité I du courant d'impulsion), et un bloc 43 dédié à l'apprentissage (détermination initiale du décalage ϕ₀ et de la durée l₀ des impulsions, et de l'intensité des impulsions pour assurer le démarrage et l'entretien des vibrations).

Ce second calculateur 38 d'une part reçoit du premier calculateur les informations représentatives du mouvement vibratoire du bol vibrant, après traitement du signal capteur par le dit premier calculateur, ces informations étant fournies pendant la séquence d'apprentissage au bloc d'apprentissage 43, pour déterminer le décalage ϕ₀ et la durée l₀ optimales, et en cours d'utilisation du bol vibrant, au bloc de gestion de synchronisation 41, pour piloter la génération des impulsions.

Le premier calculateur 37 extrait également du signal capteur S des données représentatives de l'amplitude A des vibrations, qui sont comparées, dans un comparateur 44 du second calculateur 38, à une consigne d'amplitude A_{c} fournie via le bloc de liaison 40 par les interfaces d'entrée 33, 34, 35. Le résultat de cette comparaison est transmis au bloc de régulation d'amplitude 42, la chaîne de régulation d'amplitude fonctionnant à la manière connue en soi d'un régulateur PID (régulateur proportionnel intégral dérivé) pour maintenir constante l'amplitude des vibrations, malgré les variations du poids des pièces contenues dans le bol.

Il est rappelé que pour assurer un déplacement constant des pièces dans le bol, l'énergie E fournie par le moteur 6 doit être adaptée en fonction du poids total P des pièces contenues dans le bol. Or, ce poids diminue en continu en cours de fonctionnement du fait que les pièces déplacées quittent le bol une fois arrivée en haut de la rampe hélicoïdale 3, et par ailleurs augmente de manière plus ou moins brusque lors d'un rechargement du bol par une quantité importante de pièces. On notera que, dans le système selon l'invention, l'adaptation de l'énergie E en fonction du poids des pièces est effectuée par une régulation de l'intensité I du courant d'impulsion, puisque la durée de cette impulsion est fixe, alors que dans les systèmes décrits dans le document US-A-4 216416 précité, cette énergie est adaptée, à courant constant, en faisant varier la durée de l'impulsion, ce qui est équivalent du point de vue énergétique mais entraînerait des perturbations dans le fonctionnement du moteur, du point de vue fréquence et phase.

Le bloc d'apprentissage 43 est relié à la mémoire 39, pour fournir à celle-ci les données résultant des séquences d'apprentissage, permettant ainsi de stocker en mémoire non seulement les données d'initialisation du système vibrant (décalage ϕ₀ et durée l₀), et ceci éventuellement pour différents systèmes vibrants, mais également des données sur les relations entre l'amplitude A des vibrations, l'énergie E fournie (intensité I du courant d'impulsion) et le poids P des pièces contenues dans le bol, ceci afin de pouvoir réguler, comme on le verra par la suite, le débit des pièces, et aussi pour pouvoir modifier directement, à partir des interfaces d'entrée, les paramètres du système lors d'un changement de la nature ou de poids des pièces (par exemple, changement de fabrication dans l'installation industrielle alimentés par le bol vibrant), ceci bien entendu sous réserve que l'apprentissage ait été préalablement effectué pour chaque type de pièces concernées.

La mémoire 39 est également reliée aux blocs de régulation d'amplitude 42, et de gestion de synchronisation 41, pour pouvoir leur communiquer les données mémorisées lors des séquences d'apprentissage.

Le système de commande 30 comporte aussi un circuit de génération d'impulsion 45 qui reçoit et interprète les signaux Ic de consigne de courant fournies par le bloc 42 de régulation d'amplitude, et les signaux de commande (t₁, l₀) de synchronisation fournis par le bloc 41 de gestion de synchronisation, et élabore un courant d'impulsion I alimentant l'électro-aimant 7 du moteur 8.

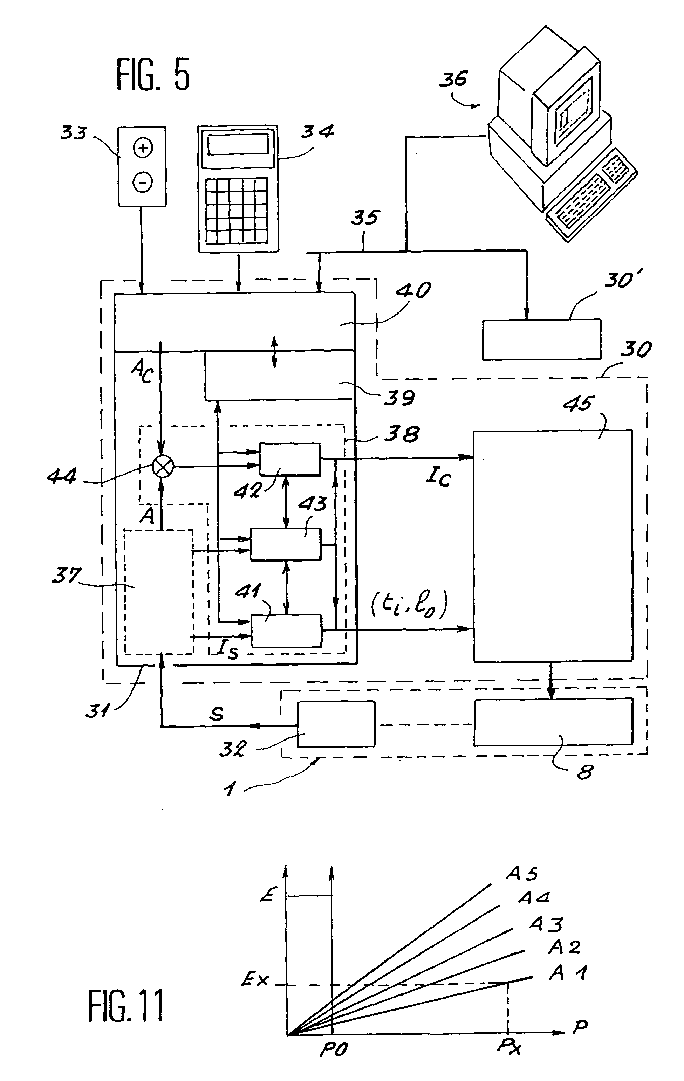

Le dessin de la figure 6 montre un capteur 32 particulièrement adapté pour la mise en oeuvre du procédé selon l'invention.

Ce capteur, fixé par exemple par collage sur le conteneur 2 du bol vibrant, est du type accéléromètre, permettant de connaître de manière très complète et précise, l'ensemble des mouvements du conteneur.

Ce capteur délivre un signal de forme générale sinusoïdale dont l'amplitude à tout instant est proportionnelle à l'accélération du système vibrant à cet instant. Sous réserve que la fréquence de vibration moyenne soit constante, l'amplitude du signal capteur S est proportionnelle à l'amplitude des vibrations.

Ce capteur comporte une rondelle piézoélectrique 51, métallisée sur ses deux faces, insérée dans un empilage serré par un boulon 52 vissé dans un boîtier cubique évidé en aluminium 58. Cet empilage comporte par ailleurs une masse sismique 53, une ronde isolante 54 en céramique et deux rondelles conductrices 55 de prise de tension reliées aux faces de la rondelle piézo-électrique 51.

Une précontrainte est exercée par un serrage dynamométrique du boulon 52, le blocage étant assuré par un contre-écrou 56.

Un circuit imprimé 57, connecté sur les faces métallisées de la rondelle piézo-électrique 51 par l'intermédiaire des rondelles conductrices 55, comporte un amplificateur de charge, un filtre actif, un amplificateur de sortie adaptateur d'impédance. Un câble raccordé au circuit 57 assure la connexion vers l'extérieur, et la cavité du boîtier 58 est remplie d'une résine d'enrobage 59.

Ce capteur permet d'obtenir une précision moyenne, suffisante pour la présente application, et il est d'un coût faible par rapport aux accéléromètres actuellement sur le marché.

Lorsque le capteur est soumis à une accélération, la masse sismique 53 exerce par son inertie sur la rondelle piézo-électrique, une pression proportionnelle à cette accélération. Celle-ci délivre alors des charges électriques en quantité proportionnelle à la variation de pression. Ces charges sont alors transformées en signal utilisable par le circuit 57 qui délivre en sortie un signal S, transmis au calculateur 37, représentatif des mouvements du conteneur 2.

Ces mouvements sont en fait très complexes. La vibration proprement dite du système vibrant, les vibrations occasionnées par la chute des matériaux dans le conteneur, les vibrations transmises par le support, les vibrations induites par le bruit ambiant de l'atelier où il est situé, se superposent.

Pour une exploitation complète et précise du capteur, il est nécessaire de traiter le signal S délivré, ce qui est effectué par le premier calculateur 37. Les bruits parasites sont provoqués par la chute des pièces dans le conteneur et par les bruits ambiants. Un filtre électronique passe bas possédant une fréquence de coupure à quelques centaines de HZ permet d'éliminer une grande partie de ces signaux parasites tout en laissant passer la fréquence fondamentale des vibrations située entre 40 et 120 HZ.

Le signal résultant du filtrage est lui-même constitué d'une sinusoïde fondamentale et d'harmoniques dues à la superposition de fréquences de résonance de certains organes constitutifs du bol vibrant (ressorts, bâtis, conteneur,...). L'amplitude relative des harmoniques (taux d'harmoniques Tₕ) augmente au fur et à mesure que l'amplitude des vibrations augmente et que l'on se rapproche des limites de fonctionnement du système.

Ce taux d'harmoniques Tₕ permet également, en liaison avec l'amplitude A, de déterminer avec précision le positionnement idéal et la largeur idéale de l'impulsion énergétique dans la période de vibration.

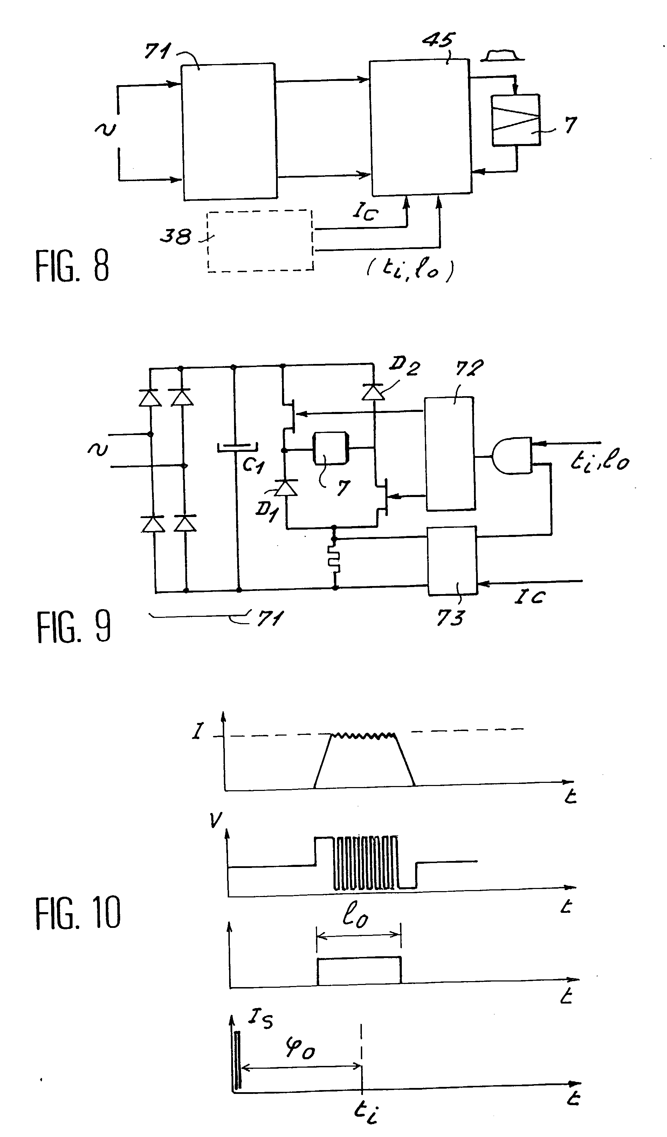

Comme l'illustre la figure 7, le signal S du capteur 32 est traité dans le premier calculateur 37, où, après filtrage, il est analysé par décomposition en séries de FOURRIER (bloc 61) ce qui permet d'extraire l'amplitude vraie A de la fréquence fondamentale, proportionnelle à l'amplitude des vibrations, ce qui permettra la régulation d'amplitude. Le taux harmoniques Tₕ dont l'analyse permet de détecter les limites de fonctionnement du système vibrant et d'optimiser le pilotage est également calculé.

De plus, le signal capteur est exploité (bloc 62) pour délivrer d'information Is de passage par zéro (position neutre du bol vibrant). Il es précisé que cette impulsion Is, est en fait déduite par un déphasage de π/4, à partir du signal d'accélération nulle délivré par le capteur lors du passage du bol vibrant à son point d'amplitude maximale.

Les différentes informations (A, Tₕ, Iₛ) sont communiquées au second calculateur 38.

Les figures 8 et 9 représentent les circuits de puissance alimentant le moteur 7.

Le schéma bloc de la figure 8 montre un circuit 71 de redressement et filtrage du courant secteur alternatif, qui fournit une tension continue de 350 à 400 V au circuit de génération d'impulsions 45. Ce circuit 45 est en fait une alimentation à découpage fonctionnant à 20 KHz et délivrant une impulsion de courant, dont l'intensité est déterminée par la consigne de courant Ic issue du second calculateur 38, et dont la position dans le temps tᵢ et la largeur l₀ sont également fournies par ce calculateur.

La figure 9 est une autre représentation du circuit d'alimentation du moteur 7, montrant de manière fonctionnelle comment les informations de phase et de durée pilotent le moteur 7 par le circuit 72 de commande du demi-pont dans lequel est placé le moteur, et comment la consigne de courant Ic pilote l'intensité de l'impulsion, par l'intermédiaire d'un circuit de régulation en courant 73.

La récupération de l'énergie nécessaire à la magnétisation du circuit magnétique du moteur 7 se fait grâce aux deux diodes D1 et D2, qui rechargent le condensateur C1.

Cette alimentation est adaptée aux moteurs électromagnétiques à électro-aimant. Toutefois, sur le même principe permettant de disposer des informations de phase ϕ₀ et l₀, et d'intensité, on peut réaliser une alimentation de pilotage des moteurs rotatifs.

Les chronogrammes de la figure 10 montrent respectivement le signal Is d'indication de l'instant origine de chaque période, le signal d'impulsion 13, la tension V fournie aux bornes du moteur, et le courant I qui le traverse.

Comme indiqué précédemment, une séquence d'apprentissage est effectuée préalablement à l'utilisation industrielle du bol vibrant.

Cette séquence est entièrement contrôlée par les deux calculateurs d'analyse du signal 37 et de régulation 38. Le capteur 32 permet de mesurer l'effet des commandes envoyées au moteur.

Cette séquence est provoquée lors de la première connexion du système de commande 30 sur un nouveau système vibrant, ou à chaque fois qu'un changement important intervient sur ce dernier. Elle comporte une phase d'apprentissage à vide pour déterminer la fréquence propre du système, le décalage ϕ₀ et la largeur l₀ d'impulsion, et les limites de fonctionnement et les coefficients de la régulation d'amplitude.

### Détermination de la fréquence propre du système.

Le programme d'apprentissage génère, à intervalles réguliers, des impulsions d'énergie croissante jusqu'à ce que le système vibrant soit mis en oscillations perceptibles (détection de passage au point de repos). A partir de ce moment, les impulsions sont envoyées en phase avec les passages au point de repos. Les oscillations sont donc entretenues, et le calculateur 38 détermine la fréquence propre du système vibrant.

### Détermination du décalage ϕ₀ et de la largeur de l'impulsion l₀.

Le calculateur fait varier le temps séparant l'impulsion Is de passage par le point repos du milieu (tᵢ) de l'impulsion 13 d'apport énergétique, jusqu'à trouver une position ou l'amplitude A de vibration est maximum.

Le calculateur fait ensuite varier la largeur l de l'impulsion à énergie constante (produit largeur l X intensité I = constante) en maintenant le décalage ϕ₀ déterminé précédemment, et note la largeur l₀ qui provoque l'amplitude maximum pour un taux d'harmoniques normal. Cette largeur l₀ étant dorénavant fixe, l'énergie communiquée au moteur est maintenant proportionnelle à la consigne de courant Ic donnée au générateur d'impulsion 45.

### Détermination des valeurs limites de fonctionnement.

Deux limites sont imposées par le système vibrant : limite basse de mise en mouvement et limite haute avant dysfonctionnement.

### Limite basse :

Le système est alternativement arrêté, puis alimenté par des impulsions de fréquence, phase et largeur égales à celles déterminées précédemment et d'énergie croissante jusqu'à ce qu'il démarre. L'amplitude des vibrations après démarrage est notée comme valeur minimum de consigne de démarrage;

Une fois le système vibrant démarré, on diminue l'énergie des impulsions jusqu'au décrochage (arrêt du système vibrant). L'énergie correspondante est notée comme énergie minimum utilisable.

Avant de déterminer la limite haute, il est nécessaire d'effectuer une détermination des échelles et donc de la valeur des incréments car, suivant le système vibrant connecté, l'amplitude des vibrations et l'énergie seront variables dans des proportions importantes. Une première approximation est faite en prenant comme origine la limite mini qui vient d'être déterminée, et en mesurant la pente de la fonction : amplitude = f(énergie).

### Limite haute :

Partant de la limite basse déterminée, l'énergie de l'impulsion est augmentée par incréments déterminés précédemment. A chaque incrément, le taux d'harmoniques Tₕ est mesuré. Dès que la vitesse de variation de ce taux augmente, la limite supérieure de fonctionnement du système vibrant est atteinte. En effet, le taux d'harmoniques est le reflet de vibrations parasites qui viennent se superposer à la fondamentale, et qui sont dues principalement à des résonances d'organes mécaniques aux limites de leur utilisation (ressorts, conteneur, moteurs).

L'amplitude obtenue en limite haute est notée comme valeur maximum utilisable.

### Réglage des coefficients de régulation d'amplitude P.I.D.

Jusqu'à ce point, la régulation d'amplitude n'était pas utilisée. Elle est maintenant mise en service avec des coefficients d'action Proportionnelle, Intégrale, Dérivée, de valeur moyenne arbitraire.

Ensuite, une consigne Ic de forme rectangulaire est donnée au système de régulation, le programme d'apprentissage, modifie les valeurs des coefficients P.I.D. en fonction du résultat vu par le capteur de manière à optimiser la réponse dynamique de la régulation à une perturbation.

Une seconde phase de la séquence d'apprentissage est ensuite effectuée, pour déterminer la relation entre l'énergie fournie E (proportionnelle à l'intensité de l'impulsion pour une durée l₀ fixe de celle-ci), l'amplitude A des vibrations et le poids P des pièces dans le conteneur.

### Relevé des courbes en fonction du poids.

Dans les explications qui précèdent, il a été considéré qu'une partie de l'énergie communiquée au système vibrant était proportionnelle au poids des pièces. Il est donc possible, en comparant l'énergie nécessaire pour provoquer une vibration d'amplitude donnée A à vide à l'énergie nécessaire pour provoquer la même amplitude pour un poids P de pièces différent, de déterminer la relation ci-dessus.

La régulation étant optimisée, le système d'apprentissage relève la courbe A = f(E) à vide, c'est-à-dire pour un poids de pièces nul. Le système relève également une deuxième courbe A = f pour un poids déterminé de pièces dans le conteneur. Par interpolation ou extrapolation entre cette courbe et la courbe à vide, il sera ultérieurement possible de calculer le poids de pièces dans le conteneur à tout moment.

Le graphique de la figure 11 qui représente la variation de l'énergie E à fournir en fonction du poids P des pièces dans le conteneur, pour différentes amplitudes de vibration (A₁... A₅), illustre cette possibilité. Par exemple, connaissant au cours du fonctionnement du bol vibrant l'énergie Ex (proportionnelle à l'intensité I de l'impulsion de courant fournie au moteur, déterminée par la régulation d'amplitude), et la valeur A₁ de l'amplitude (à partir du signal capteur), le calculateur pourra déduire le poids Px des pièces que le bol contient.

La connaissance, à tout instant, de la charge P du conteneur, permettra en cours de fonctionnement, alors que cette charge varie, de réguler le débit effectif des pièces, en réglant l'intensité des impulsions, et donc l'amplitude des vibrations, en fonction de la vitesse de variation de la charge, alors que la régulation d'amplitude à elle-seule ne permet pas d'assurer un débit constant. En effet, la régulation d'amplitude des vibrations permet d'assurer une vitesse constante de déplacement des pièces, mais ne permet pas à elle seule de prendre en compte par exemple des pièces qui, bien que se déplaçant à vitesse constante, rechutent inévitablement du chemin hélicoïdal 3 dans l'intérieur du bol et sont recyclées après avoir parcouru une partie au moins du chemin.

La connaissance de la charge effective du conteneur permet également de provoquer un rechargement automatique du bol vibrant lorsque cette charge passe en-dessous d'un seuil mini prédéfini, évitant ainsi de devoir utiliser pour cela d'autres détecteurs.

L'auto-apprentissage permet d'éviter tous les réglages d'adaptation d'un système de pilotage à un système vibrant. Il permet également de mémoriser plusieurs apprentissages différents, ce qui permet d'adapter automatiquement un système de commande conforme à l'invention au traitement de pièces différentes ou à des conteneurs différents sans nécessité de refaire à chaque fois tous les réglages.

Comme vu précédemment lors de l'utilisation, la régulation d'amplitude compare une consigne A_{c} à la valeur réelle A donnée par le capteur. Il s'ensuit la constatation d'une erreur. Cette erreur est communiquée à la régulation de type PID, qui en fonction des coefficients déterminés en apprentissage, va élaborer une consigne de courant I_{c} destinée à compenser l'erreur de manière statique et dynamique (en tenant compte de la vitesse de variation de l'erreur).

La régulation va également surveiller le taux d'harmoniques Tₕ de manière à détecter une tendance du système vibrant à entrer dans un fonctionnement anarchique et, si c'est le cas, à diminuer de manière autoritaire la consigne d'amplitude pour essayer d'éviter ce mauvais fonctionnement.

Dans le cas où il deviendrait impossible d'éviter un tel fonctionnement anarchique, la régulation prend alors l'initiative d'arrêter complètement le système pour le redémarrer dans les conditions précédentes. Le redémarrage se fait alors en utilisant une rampe permettant un retour progressif vers les conditions de fonctionnement normales.

Cette faculté à éviter ou minimiser ces fonctionnements anarchiques est particulièrement intéressante pour augmenter la durée de vie des composants mécaniques.

Cette régulation d'amplitude ne donne toutefois toutes ses possibilités que dans la mesure où le fonctionnement est parfaitement maîtrisé par le système de régulation de phase. En effet, un mauvais instant de l'apport en énergie modifierait l'amplitude des vibrations par désynchronisation mais elle aurait aussi pour effet de modifier la fréquence optimale car le poids apparent des pièces deviendrait alors non nul de manière permanente. Or, le signal délivré par le capteur accéléromètre est proportionnel à l'amplitude de la vibration à fréquence fixe. Toutefois, à amplitude de vibration fixe, il varie comme le carré de la fréquence. Il est donc fondamental pour assurer une régulation d'amplitude des vibrations et donc de vitesse de déplacement des matériaux d'avoir une maîtrise parfaite du déphasage.

Le système de commande selon l'invention présente aussi plusieurs avantages, tels que :
- la possibilité d'adapter automatiquement le débit en fonction de l'environnement du système vibrant, par une simple adaptation de la consigne d'amplitude,
- la suppression des interventions des opérateurs en cours de fonctionnement, alors que les systèmes antérieurs impliquent, par exemple pour modifier le débit, une possibilité d'accès des opérateurs à tous les réglages possibles, ce qui est une source de dysfonctionnement suite à des interventions intempestives non contrôlées,
- le contrôle à distance du fonctionnement individuel de chaque système vibrant et les adaptations éventuelles requises, et la centralisation de ce contrôle pour de nombreux systèmes raccordés sur un réseau commun 35, ainsi que la possibilité de télémaintenance.

Bien entendu, l'invention n'est pas limitée au procédé et aux moyens de mise en oeuvre qui viennent d'être décrits uniquement à titre d'exemple.

En particulier, l'instant d'origine fixant le point de départ du décalage ϕ₀ peut ne pas être celui correspondant au passage du système vibrant dans sa position de repos, mais celui correspondant au dit passage en tout autre point, dans la mesure où cette origine est située temporellement en dehors de la durée d'application de l'impulsion et de préférence immédiatement après cette dernière.

Egalement, d'autres types de capteurs peuvent être utilisés, et les moyens de traitement du signal, les moyens de régulation et d'apprentissage, et le moyens de génération des signaux de puissance peuvent être modifiés technologiquement ou remplacés par des moyens équivalents du point de vu fonctionnel, sans sortir du cadre de l'invention.

On notera encore que, en plus des liaisons du système sur un réseau de gestion 35, et des interfaces, tels que 33, 34, de commande directe ou de programmation, le système peut comporter un interface constitué par des entrées et sorties digitales permettant d'assurer un certain nombre de fonctions d'automatisme (combinaisons de signaux, temporisations, comptage, fenêtrages...), lesquelles fonctions permettent d'insérer le système vibrant dans son contexte d'exploitation, par exemple pour :
- commander le chargeur de remplissage lorsque le système vibrant est vide,
- compter les pièces délivrées à la machine alimentée par le système vibrant,
- tenir compte d'un arrêt des machines en aval et transmettre l'information vers les machines en amont, etc...

## Revendications

1. Procédé de commande de systèmes vibrants utilisés pour le transport ou l'alimentation d'objets dans des installations industrielles, selon lequel on fournit au dit système vibrant (1) des impulsions énergétiques (13) de durée et d'intensité prédéterminées pour le maintenir en vibration avec une amplitude souhaitée et assurer un déplacement voulu des dits objets, caractérisé en ce que, lors de chaque période de vibration prise individuellement, on applique l'impulsion (13) avec un décalage de durée ϕ₀ prédéterminée, sensiblement constante, par rapport à l'instant réel (O₁, O₂) du passage du système dans une position fixe pré-déterminée définissant le début de chaque période et choisie en dehors des positions dans lesquelles l'impulsion est appliquée.

2. Procédé selon la revendication 1, caractérisé en ce que la dite position fixe pré-déterminée est la position de repos du système vibrant.

3. Procédé selon l'une des revendications 1 ou 2, caractérisé en ce que la durée (l₀) des impulsions (13) est constante.

4. Procédé selon l'une quelconque des revendications 1 à 3, caractérisé en ce que on régule l'amplitude (A) des vibrations du système vibrant sur une valeur de consigne (Ac) en faisant varier l'intensité (I) de l'impulsion fournie.

5. Procédé selon l'une quelconque des revendications 1 à 4, caractérisé en ce que on détermine le décalage (ϕ₀) et la durée (l₀) des impulsions au cours d'une séquence d'apprentissage au cours de laquelle :
- on provoque la mise en vibration du système vibrant à vide,
- on fait varier le décalage (ϕ) et la durée (l) des impulsions, et on mesure l'amplitude des vibrations,
- on note le décalage (ϕ₀) et la durée (l₀) des impulsions provoquant une amplitude de vibrations maximale compatible avec les caractéristiques mécaniques du système vibrant.

6. Procédé selon la revendication 5, caractérisé en ce que au cours de la dite séquence d'apprentissage, on détermine des courbes représentatives de l'amplitude A des vibrations en fonction de l'énergie (E) des impulsions pour au moins deux charges (P) d'objets différentes du système vibrant, et, en cours de fonctionnement, on détermine en permanence la charge (P) du système à partir des dites courbes et des couples de valeurs mesurées d'énergie (E) d'impulsions et d'amplitude (A) de vibrations.

7. Procédé selon la revendication 6, caractérisé en ce que, en cours de fonctionnement, lorsque la charge (P) d'objets varie, on régule le débit d'objets en réglant l'intensité des impulsions en fonction de la vitesse de variation de la charge.

8. Dispositif de commande de systèmes vibrants utilisés pour le transport et l'alimentation d'objets, comportant un capteur (32) pour fournir un signal (S) d'information sur les vibrations du système vibrant, des moyens (37) de traitement du signal (S) fourni par le capteur, pour détecter, au cours de chaque cycle de vibration, l'instant réel de passage du système vibrant dans une position fixe prédéfinie, et fournir un signal de synchronisation (Is) correspondant à cet instant, et des moyens de régulation (38, 45) pour fournir au dit système vibrant des impulsions énergétiques (13) avec un décalage, de durée (ϕ₀) prédéterminée, sensiblement constante, par rapport au dit instant.

9. Dispositif selon la revendication 8, caractérisé en ce que les moyens (37) de traitement du signal du capteur fournissent également un signal (A) représentatif de l'amplitude des vibrations, et les moyens de régulation (38, 45) déterminent aussi l'intensité I de l'impulsion énergétique de manière à réguler l'amplitude des vibrations sur une valeur de consigne (Ac).

10. Dispositif selon l'une des revendications 8 ou 9, caractérisé en ce qu'il comporte des moyens d'apprentissage (43) pour déterminer, au cours d'une séquence d'apprentissage, la valeur (ϕ₀) du dit décalage et la durée (l₀) de la dite impulsion.

11. Dispositif selon l'une des revendications 8 à 10, caractérisé en ce que le capteur est un accéléromètre (32) fixé sur le conteneur mobile (2) du système vibrant.

12. Système vibrant pour le transport et l'alimentation d'objets, caractérisé en ce qu'il comporte un dispositif de commande selon l'une des revendications 8 à 11.
